(19) Europäisches Patentamt
European Patent Office
Office européen des brevets

(11) **EP 3 211 823 B1**

(12) **FASCICULE DE BREVET EUROPEEN**

(45) Date de publication et mention de la délivrance du brevet:
**03.01.2018 Bulletin 2018/01**

(51) Int Cl.:
*H04L 9/00* (2006.01)  *G06F 21/72* (2013.01)

(21) Numéro de dépôt: **17157049.2**

(22) Date de dépôt: **21.02.2017**

(54) **MÉTHODE D'EXÉCUTION CONFIDENTIELLE D'UN PROGRAMME OPÉRANT SUR DES DONNÉES CHIFFRÉES PAR UN CHIFFREMENT HOMOMORPHE**

VERFAHREN ZUR VERTRAULICHEN AUSFÜHRUNG EINES DATEN VERARBEITETENDEN PROGRAMMS, WELCHE DURCH EINE HOMOMORPHISCHE VERSHLÜSSELUNG VERSCHLEIERT WURDEN

METHOD FOR CONFIDENTIAL EXECUTION OF A PROGRAM OPERATING ON DATA ENCRYPTED BY MEANS OF HOMOMORPHIC ENCRYPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2016 FR 1651502**

(43) Date de publication de la demande:
**30.08.2017 Bulletin 2017/35**

(73) Titulaire: **Commissariat à l'Energie Atomique et aux Energies Alternatives**
**75015 Paris (FR)**

(72) Inventeurs:
• **SAVRY, Olivier**
**38360 Sassenage (FR)**

• **HISCOCK, Thomas**
**38000 Grenoble (FR)**

(74) Mandataire: **Brevalex**
**56, Boulevard de l'Embouchure**
**B.P. 27519**
**31075 Toulouse Cedex 2 (FR)**

(56) Documents cités:
**WO-A1-2015/008607    US-A1- 2015 381 348**

• **PETER T BREUER ET AL: "A Fully Homomorphic Crypto-Processor Design", 27 février 2013 (2013-02-27), ENGINEERING SECURE SOFTWARE AND SYSTEMS, SPRINGER BERLIN HEIDELBERG, BERLIN, HEIDELBERG, PAGE(S) 123 - 138, XP047032785, ISBN: 978-3-642-36562-1 * le document en entier ***

EP 3 211 823 B1

**Description**

## DOMAINE TECHNIQUE

L'objet de la présente invention concerne le domaine des processeurs sécurisés et plus particulièrement du calcul sécurisé par chiffrement homomorphe.

## ÉTAT DE LA TECHNIQUE ANTÉRIEURE

Le calcul sécurisé a fait récemment l'objet d'importantes recherches, fondées, notamment, sur des techniques de chiffrement homomorphe.

On rappelle qu'un chiffrement homomorphe permet d'effectuer des opérations (en pratique des opérations arithmétiques d'addition ou de multiplication et des opérations logiques équivalentes) sur des données sans jamais les dévoiler. Plus précisément, un chiffrement homomorphe est un chiffrement à clé asymétrique $Enc_{pk}$ (de clé publique $pk$) vérifiant la propriété suivante :

$$Enc_{pk}: \ X \rightarrow Y$$

$$Dec_{sk}\left[Enc_{pk}(a) \oplus Enc_{pk}(b)\right] = a+b \qquad (1)$$

où X est l'espace des messages clairs (dit plus simplement espace des clairs) et $Y$ est l'espace des messages chiffrés (dit plus simplement espace des chiffrés), + une opération additive dans l'espace des clairs conférant à X une structure de groupe, $\oplus$ une opération dans l'espace des chiffrés conférant à Y une structure de groupe. On comprend ainsi que l'application de (X,+) dans (Y,$\oplus$) est un homomorphisme de groupes. $Dec_{sk}$ est la fonction de déchiffrement correspondant à $Enc_{pk}$ (où $sk$ est la clé secrète de l'utilisateur).

Il résulte de l'expression (1) qu'il est possible d'effectuer une opération additive entre deux clairs ($a,b$) à partir d'une opération correspondante entre leurs chiffrés ($Enc_{pk}(a),Enc_{pk}(b)$).

Plus généralement, un chiffrement homomorphe peut être considéré comme un morphisme d'anneau entre l'espace des clairs (muni des opérations +,x) et l'espace des chiffrés (muni des opérations correspondantes $\oplus$, $\otimes$). On a alors les propriétés suivantes :

$$Dec_{sk}\left(Enc_{pk}(a+b)\right) = Dec_{sk}\left(Enc_{pk}(a) \oplus Enc_{pk}(b)\right) = a+b \qquad (2\text{-}1)$$

$$Dec_{sk}\left(Enc_{pk}(a \times b)\right) = Dec_{sk}\left(Enc_{pk}(a) \otimes Enc_{pk}(b)\right) = a \times b \qquad (2\text{-}2)$$

A l'aide des expressions (2-1) et (2-2), il est donc possible d'évaluer une fonction $F$ quelconque, décomposable en opérations élémentaires d'addition et de multiplication, dans l'espace des chiffrés puis de déchiffrer le résultat.

De la même façon, on peut évaluer une fonction logique $F$ quelconque décomposable en opérations logiques élémentaires AND, OR et NOT dans l'espace des chiffrés. On convertit pour ce faire ces opérations logiques en opérations arithmétiques :

$$AND(x, y) = xy \qquad (3\text{-}1)$$

$$NOT(x) = 1 - x \qquad (3\text{-}2)$$

$$OR(x, y) = NOT\left(AND\left(NOT(x), NOT(y)\right)\right) = 1 - (1-x)(1-y) \qquad (3\text{-}3)$$

et l'on calcule les membres de droite des équations (3-1) à (3-3) dans l'espace des chiffrés.

Lorsqu'une fonction $F$ est définie dans l'espace des clairs, on notera dans la suite $\overline{F}$ la fonction équivalente dans l'espace des chiffrés. Autrement dit :

$$F(m_1,..,m_M) = Dec_{pk}\left(\overline{F}(Enc_{pk}(m_1),..,Enc_{pk}(m_M))\right) \qquad (4)$$

où $m_1,..,m_M$ sont les données en clair. Le terme de gauche correspond à une évaluation dans le domaine des clairs et $\overline{F}(Enc_{pk}(m_1),...,Enc_{pk}(m_M))$ à une évaluation dans le domaine des chiffrés, dite aussi évaluation homomorphe. A une évaluation de $F$ en clair on fait ainsi correspondre une évaluation homomorphe $H.Eval_{pk}(F)$.

Les méthodes de chiffrement homomorphes ont vu le jour avec la thèse de Craig Gentry intitulée « A fully homomorphic encryption scheme ».

Les cryptosystèmes homomorphes actuels sont largement basés sur des chiffrements dérivés du problème LWE (*Learning With Errors*) ou RLWE (*Ring Learning With Errors*). Dans ces cryptosystèmes, le chiffrement consiste à masquer avec du bruit un message. Réciproquement, le déchiffrement consiste à retirer ce bruit, ce qui est faisable si l'on connaît la clef privée du cryptosystème mais en revanche extrêmement difficile si celle-ci est inconnue. Les opérations homomorphes maintiennent naturellement ce masquage voire l'amplifie. Plus précisément, si l'on représente la fonction $F$ précitée selon une décomposition arborescente, chaque noeud de l'arbre correspondant à une opération arithmétique (ou logique) élémentaire, un bruit est ajouté à chaque niveau de l'arbre. On conçoit donc que si la fonction $F$ (et donc $\overline{F}$) présente une profondeur de calcul importante (c'est-à-dire un grand nombre de niveaux dans la représentation arborescente), le niveau de bruit dans le résultat d'évaluation de la fonction $\overline{F}$ puisse devenir élevé. Lorsque le bruit dépasse un seuil (dépendant du schéma de chiffrement utilisé), il n'est plus garanti que le résultat soit encore déchiffrable.

Lorsqu'un cryptosystème homomorphe permet d'effectuer n'importe quelle profondeur de calcul, il est dénommé entièrement homomorphe ou FHE (Fully Homomorphic Encryption). A défaut, il est dit relativement homomorphe ou SHE (Somewhat Homomorphic).

Le cryptosystème cité plus haut est entièrement homomorphe. L'idée de base de Gentry est d'utiliser une méthode de chiffrement possédant une certaine propriété de récursivité (*bootstrappability*) à savoir celle de pouvoir évaluer sa propre fonction de déchiffrement en sus des opérations arithmétiques (ou logiques) de base. On peut alors construire une méthode de chiffrement FHE comprenant une série d'étapes de chiffrement élémentaires entrecoupées par des étapes de déchiffrement, chaque étape de déchiffrement permettant de faire repasser le niveau de bruit sous un seuil acceptable et donc d'en éviter la divergence.

A ce jour, les méthodes de chiffrement les plus efficaces sont la méthode BGV (Brakerski, Gentry, Vaikuntanathan) les schémas dérivés de ATV (Alt-López, Tromer, Vaikuntanathan) et de GHW (Gentry Halevi Waters). Leur sécurité théorique est basée sur le problème LWE ou RLWE.

On trouvera une description d'un schéma de chiffrement, dérivé du schéma ATV, dénommé YASHE, dans l'article de J.W. Bos et al. intitulé « Improved security for a ring-based fully homomorphic encryption scheme » publié dans Cryptology ePrint Archive, Report 2013/075, 2013. De même, on trouvera une description d'un schéma de chiffrement dérivé du schéma BGV, dénommé FV) dans l'article de Jungfen Fan et al. intitulé « Somewhat practical fully homomorphic encryption », publié dans Cryptology ePrint Archive, Report 2012/144, 2012.

On rappellera ici succinctement le principe du schéma de chiffrement YASHE.

On considère un entier non nul ($q \in \mathbf{Z}^*$) et on note $[x]_q$ la valeur de $x$ modulo $q$, autrement dit l'entier unique de l'intervalle $]-q/2,q/2]$ tel qu'il existe $q \in \mathbf{Z}$, avec $x=kq+[x]_q$ ($[x]_q \in \mathbf{Z}/q\mathbf{Z}$). On définit l'anneau $R=\mathbf{Z}[X]/\langle P(X)\rangle$ comme l'anneau quotient des polynômes à coefficients dans $\mathbf{Z}$ et $\langle P(X)\rangle$ l'idéal engendré par le polynôme $P(X)$. Le polynôme $P(X)$ est choisi irréductible (par exemple $P(X)=X^d+1$ avec $d = 2^n$) et donc $R$ est un corps. On note $R_q$ l'anneau des polynômes de $R$ dont les coefficients appartiennent à $\mathbf{Z}/q\mathbf{Z}$. On note $\chi_{err}$ et $\chi_{key}$ deux distributions distinctes sur $R_q$, par exemple deux distributions gaussiennes de variances différentes et $u(R_q)$ la distribution uniforme sur $R_q$. On considère enfin un entier $t<q$ et l'on note $\Delta = \lfloor q/t \rfloor$ où $\lfloor . \rfloor$ est la partie entière par défaut.

La méthode de chiffrement YASHE fait appel à deux polynômes $f$ et $g$ tirés de manière aléatoire dans $R_q$ au moyen de la distribution $\chi_{key}$. $f$ est supposé tel que $f = 1 + tf'$ soit inversible dans $R_q$. Si $f$ n'est pas inversible, on procède à un autre tirage de $f'$.

On obtient ensuite un couple de clé publique et clé privée :

$$sk = f \in R_q \qquad (5\text{-}1)$$

$$pk = h = t.g.f^{-1} \in R_q \qquad (5\text{-}2)$$

Le chiffrement est effectué en générant deux polynômes *e,u* de manière aléatoire dans $R_q$, au moyen de la distribution $\chi_{err}$ :

$$e \leftarrow \chi_{err} \; ; \; u \leftarrow \chi_{err} \qquad (6)$$

et en calculant le chiffré en ajoutant un terme de bruit comme suit :

$$ct = h.u + e + \Delta.m \in R_q \qquad (7)$$

Réciproquement, le déchiffrement redonne le message *m* à partir de *ct* et de la clé privée *sk = f* comme suit :

$$m = \left[\left[ \frac{t}{q}\left( f.ct \right) \right]\right]_t \qquad (8)$$

Nous considérerons dans la suite un processeur capable d'exécuter un programme composé d'instructions. Le programme se présente sous la forme d'un fichier binaire généré au moyen d'un compilateur à partir d'un programme source en assembleur ou de niveau supérieur. Chaque instruction est représentée par un code binaire qui obéit à un format d'instruction. Une instruction est définie par une opération élémentaire à réaliser (opération logique et arithmétique par exemple) et, le cas échéant, un opérande source et un opérande de destination. Les opérandes sont donnés par le contenu de registres internes ou d'emplacements mémoire. Les instructions sont exécutées une à une par le processeur.

Il a été proposé qu'un tel processeur puisse opérer directement sur des données (ou des opérandes) chiffrées par un chiffrement homomorphe. Plusieurs approches peuvent être envisagées.

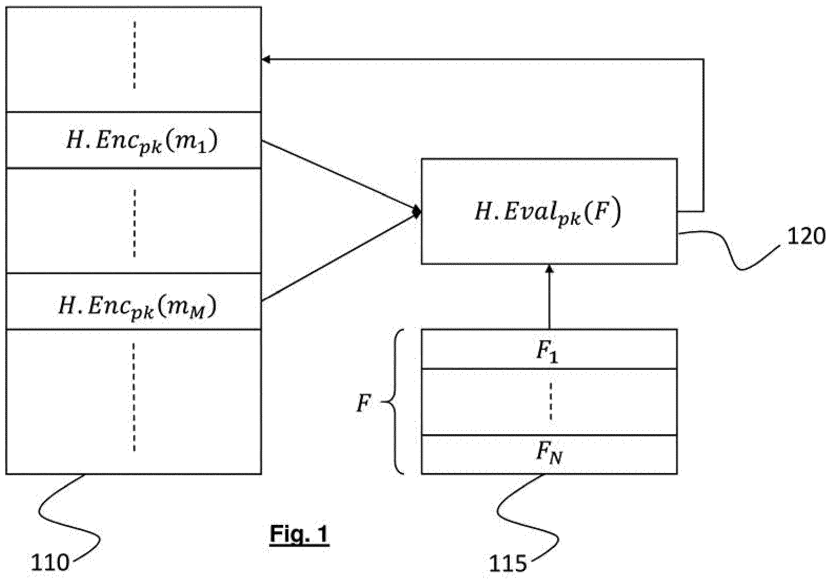

On a représenté schématiquement en Fig. 1 une première approche pour exécuter un programme sur des données chiffrées par un chiffrement homomorphe.

Selon cette approche, la totalité du programme est exécutée de manière homomorphe. Plus précisément, si l'on représente le programme entier par une fonction F, cette fonction peut être évaluée de manière homomorphe sur l'espace des données chiffrées.

On a représenté en 110 une zone mémoire stockant des données (mémoire RAM et/ou mémoire flash et/ou registres). Les données y sont stockées sous forme chiffrée par chiffrement homomorphe. Les opérandes en clair sont notés $m_i$ et ceux chiffrés sont notés $H.Enc_{pk}(m_i)$, $i = 1,..,M$. De manière similaire, les instructions du programme sont stockées dans une mémoire programme 115.

La fonction *F* représentant l'ensemble des instructions du programme est évaluée en 120 de manière homomorphe. L'évaluation homomorphe de la fonction *F* a été désignée ici par $\overline{F} = H.Eval_{pk}(F)$.

Or, la profondeur de calcul de *F*, potentiellement dépendante de la longueur du programme, peut ainsi atteindre des valeurs très élevées. On est ainsi confronté à un problème d'amplification de bruit auquel il faut remédier par des techniques de bootstrapping (évaluation de la fonction de déchiffrement dans l'espace des chiffrés), très consommatrices en ressources de calcul et en taille mémoire (expansion de la taille des clés et des chiffrés).

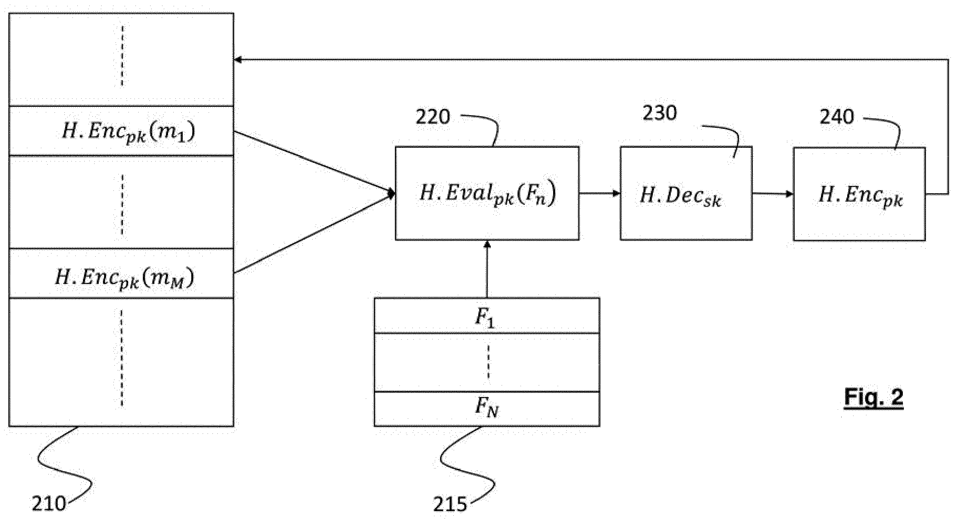

Une approche alternative est représentée en Fig. 2. Selon cette approche, les données sont également stockées en mémoire 210 sous forme chiffrée par un chiffrement homomorphe et les instructions sont stockées dans la mémoire programme 215. En revanche, chacune des instructions fait indépendamment l'objet d'une évaluation homomorphe. Plus précisément, si l'on note $F_n$, $n = 1,...N$ les fonctions réalisées par ces instructions et si l'on suppose pour simplifier que chacune d'entre elles peut dépendre de l'ensemble des données $m_1,...,m_M$, chacune de ces instructions est d'abord évaluée en 220 de manière homomorphe. Ainsi, la profondeur de calcul est limitée à celle d'une seule instruction et de ce fait relativement réduite. Le résultat est ensuite déchiffré en 230 au moyen de la clé secrète $sk(H.Dec_{sk})$ pour éviter une propagation du bruit à l'instruction suivante. Le résultat est ensuite rechiffré en 240 par le chiffrement $(H.Enc_{pk})$ pour en assurer la confidentialité avant d'être stocké dans la zone mémoire, par exemple dans un registre intermédiaire. Il pourra ainsi être ensuite utilisé lors de l'évaluation homomorphe d'une instruction ultérieure.

L'inconvénient majeur de cette approche est que le résultat d'évaluation de l'instruction apparaît en clair lors de son exécution, ce qui nuit à la confidentialité et rend possible certaines attaques.

On cite aussi dans l'art antérieur l'article par P. T. Breuer et J. P. Bowen, "A Fully Homomorphic Crypto-Processor Design", publié par Springer Berlin Heidelberg le 27 février 2013, exposant un processeur capable d'exécuter des instructions chiffrées de manière native.

De plus, le document de publication de demande de brevet WO2015/008607 A1 publié le 22 janvier 2015 par Yoshida et al expose un appareil de déchiffrement auto-corrigeant employant un système de déchiffrement homomorphe.

Le document de publication de demande de brevet US2015/0381348 A1 publié le 31 décembre 2015 par Takenaka et al expose une méthode de chiffrement comprenant le chiffrement d'un ensemble de polynômes à l'aide d'un système de chiffrement homomorphe. Le but de la présente invention est par conséquent de proposer une méthode d'exécution d'un programme opérant sur des données chiffrées par chiffrement homomorphe qui soit confidentielle, au sens où elle ne nécessite à aucun moment d'exposer des données ou des résultats d'évaluation en clair.

## EXPOSÉ DE L'INVENTION

La présente invention est définie par une méthode d'exécution d'un programme opérant sur des données chiffrées au moyen d'un chiffrement homomorphe, ledit programme comprenant une pluralité d'instructions, chaque instruction pouvant être représentée par une fonction desdites données, l'exécution de ladite instruction comprenant une évaluation homomorphe par un processeur de ladite fonction à partir desdites données chiffrées, caractérisée en ce que :

(a) le résultat de ladite évaluation est masqué par une première opération sommation avec une séquence aléatoire préalablement chiffrée par ledit chiffrement homomorphe, ladite première opération de sommation dans le domaine des chiffrés correspondant à une opération de sommation modulo 2 dans le domaine des données en clair;

(b) le résultat de ladite évaluation ainsi masqué est d'abord déchiffré, puis rechiffré au moyen dudit chiffrement homomorphe ;

(c) le résultat obtenu à l'étape (b) est démasqué par une seconde opération de sommation avec ladite séquence aléatoire préalablement chiffrée par ledit chiffrement homomorphe, ladite seconde opération de sommation dans le domaine des chiffrés correspondant à une opération de sommation modulo 2 dans le domaine des données en clair, le résultat de la seconde opération de sommation étant stocké dans une zone mémoire.

Selon une variante, les étapes (a), (b) et (c) sont effectuées par un coprocesseur distinct dudit processeur.

Selon un premier mode de réalisation, lesdites instructions sont stockées sous la forme de fonctions exprimées dans le domaine des données en clair, lesdites instructions étant traduites lors du boot en exprimant lesdites fonctions dans le domaine des données chiffrées, avant d'être stockées dans une mémoire programme.

Selon un second mode de réalisation, lesdites instructions sont stockées dans une mémoire programme sous la forme de fonctions exprimées dans le domaine des données en clair, lesdites instructions étant traduites à la volée, au fur et à mesure de leur exécution, en exprimant lesdites fonctions dans le domaine des données chiffrées.

Le chiffrement peut être un chiffrement entièrement homomorphe ou, avantageusement, relativement homomorphe. Dans ce dernier cas, il peut être par exemple un chiffrement BGV, ATV ou YASHE.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1 représente schématiquement un premier exemple d'exécution d'un programme sur des données chiffrées par un chiffrement homomorphe ;

La Fig. 2 représente schématiquement un second exemple d'exécution d'un programme sur des données chiffrées par un chiffrement homomorphe ;

La Fig. 3 représente schématiquement le principe d'une méthode d'exécution confidentielle sur des données chiffrées par un chiffrement homomorphe, selon un mode de réalisation de l'invention.

## EXPOSÉ DÉTAILLÉ DE MODES DE RÉALISATION PARTICULIERS

Nous considérerons dans la suite un programme comprenant une pluralité d'instructions destinées à être séquentiellement exécutées par un processeur (CPU ou microcontrôleur). Les instructions opèrent sur des données stockées dans une zone mémoire (par exemple mémoire flash, RAM, registres). Ces données sont stockées sous forme chiffrée au moyen d'un chiffrement homomorphe, par exemple un chiffrement relativement homomorphe (SHE), caractérisé par sa clé publique $pk$ et sa clé secrète $sk$.

Chaque instruction est évaluée de manière homomorphe. Plus précisément, chaque instruction peut s'exprimer sous forme d'une opération logique (combinaison d'opérations élémentaires AND, OR, NOT) ou arithmétique (combinaison d'opérations élémentaires d'addition et de multiplication) soit dans l'espace des clairs (fonction $F$), soit, de manière

équivalente (fonction $\overline{F}$) dans l'espace des chiffrés. La traduction de F en $\overline{F}$ peut être réalisée offline, c'est-à-dire préalablement au stockage du programme. Le cas échéant, la traduction peut être réalisée lors du boot, l'ensemble des instructions traduites étant alors stocké dans une mémoire programme, ou bien encore effectuée à la volée par le processeur, instruction par instruction.

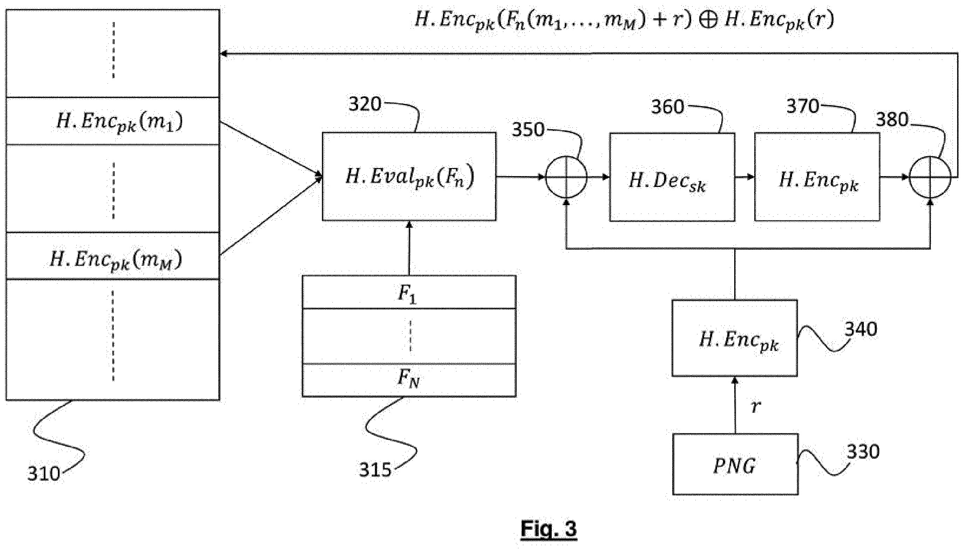

La Fig. 3 représente schématiquement le principe d'une méthode d'exécution confidentielle sur des données chiffrées par un chiffrement homomorphe, selon un mode de réalisation de l'invention.

On a désigné par 310 l'espace mémoire stockant les données chiffrées et par 315 l'espace mémoire stockant les instructions du programme (supposées ici exprimées dans l'espace des chiffrés).

Chaque nouvelle instruction $F_n$ est évaluée de manière homomorphe, en 320, autrement dit un résultat d'évaluation $H.Eval_{pk}(F_n)$ est obtenu comme dans la seconde approche envisagée dans la partie introductive.

Toutefois, à la différence de cette dernière, le résultat de l'évaluation fait l'objet d'un masquage homomorphe avant d'être déchiffré.

Plus précisément, on génère un masque aléatoire r en 330 au moyen d'un générateur de séquence pseudo-aléatoire ou de préférence un générateur de séquence aléatoire de qualité cryptographique connu en soi.

Un générateur de séquence pseudo-aléatoire est généralement constitué d'un ou de plusieurs registres à décalage, rebouclés sur eux-mêmes et/ou entre eux et dont les sorties sont combinées de manière linéaire ou non-linéaire. La taille du masque est choisie égale à la longueur du résultat d'évaluation $H.Eval_{pk}(F_n)$.

Un générateur pseudo-aléatoire utilise une source d'entropie physique, comme un bruit thermique d'une résistance par exemple et le chiffre par exemple au moyen d'un chiffrement symétrique.

Le cas échéant le masque peut résulter de la somme d'un nombre arbitraire de nombres aléatoires ou pseudo-aléatoires. Ce nombre arbitraire peut également être aléatoire ou pseudo-aléatoire dans le but de résister à des attaques d'ordre supérieur.

En 340, le masque aléatoire r fait ensuite l'objet d'un chiffrement homomorphe avec le même cryptosystème (et en particulier la même clé publique $pk$) que celui ayant servi à chiffrer les données.

Alternativement, les masques auront pu être générés directement sous forme chiffrée ou encore préalablement stockés sous forme chiffrée dans une mémoire.

Dans tous les cas, le masque ainsi chiffré, $H.Enc_{pk}(r)$ est ensuite ajouté au moyen d'une opération de sommation dans le domaine des chiffrés (c'est-à-dire au moyen de l'opération notée $\oplus$) au résultat d'évaluation homomorphe $H.Eval_{pk}(F_n)$. L'opération de sommation $\oplus$ correspond par définition à l'opération de sommation dans le domaine des clairs, +, ici considérée comme une addition modulo 2 (autrement dit bit à bit sans retenue). Avantageusement, le chiffrement homomorphe est choisi tel que l'opération de sommation $\oplus$ est également une opération de sommation modulo 2. C'est notamment le cas pour les algorithmes de chiffrement ATV et BGV mentionnés précédemment.

Le résultat de l'évaluation, masqué par le masque aléatoire, est ensuite déchiffré au moyen de la clé secrète $sk$ en 360. Avantageusement, la clé secrète est stockée dans un registre sécurisé du processeur. Ce déchiffrement permet d'éviter une propagation du bruit d'une instruction à la suivante, comme expliqué précédemment. Le résultat du déchiffrement n'est autre que $F_n(m_1,...,m_M)+r$.

Le résultat du déchiffrement est ensuite à nouveau chiffré au moyen du chiffrement homomorphe 370, puis démasqué en 380, en l'ajoutant au masque aléatoire chiffré $H.Enc_{pk}(r)$ au moyen de l'opération $\oplus$ (avantageusement une sommation bit à bit au moyen d'un XOR comme indiqué supra) en 380.

La somme ainsi obtenue est ensuite stockée dans la zone mémoire 310.

Grâce au masquage homomorphe en amont de l'opération de déchiffrement du résultat, le résultat de l'instruction $F_n(m_1,...,m_M)$ n'apparait en clair à aucune étape de son exécution par le processeur.

L'opération de démasquage en 380 étant effectuée de manière homomorphe dans le domaine des chiffrés, celle-ci ne révèle pas le résultat de l'instruction.

On comprendra en effet que le résultat démasqué $H.Enc_{pk}(Fn(m_1,...,m_M)+r)\oplus H.Enc_{pk}(r)$ est sous forme chiffrée et que son stockage dans la zone mémoire ne présente pas de problème de sécurité. Son traitement par une instruction ultérieure sera celui d'un chiffré homomorphe de $F_n(m_1,...,m_M)$, et donc identique à celui qui serait effectué sur $F_n(m_1,...,m_M)$, puisque :

$$Dec_{pk}\left(H.Enc_{pk}\left(F_n\left(m_1,...,m_M\right)+r\right)\oplus H.Enc_{pk}\left(r\right)\right)=$$
$$Dec_{pk}\left(H.Enc_{pk}\left(F_n\left(m_1,...,m_M\right)+r\right)\right)+Dec_{pk}\left(H.Enc_{pk}\left(r\right)\right)= \qquad (9)$$
$$F_n\left(m_1,...,m_M\right)+r+r=F_n\left(m_1,...,m_M\right)$$

Par rapport à la seconde approche illustrée en Fig. 2, seul le bruit correspondant à une seule opération dans le domaine des chiffrés, en l'occurrence l'opération de démasquage, est à prendre en compte au niveau de l'instruction suivante. Ce bruit étant bien dimensionné, aucun déchiffrement supplémentaire (étape de *bootstrapping)* n'est à prévoir.

Dans une implémentation matérielle, les opérations 320 à 380 peuvent être effectuées par le processeur lui-même ou bien, selon une autre variante de réalisation, distribuées entre le processeur et un coprocesseur dédié. Dans ce cas, les opérations 330 à 380, ne nécessitant d'avoir accès à l'instruction, peuvent être prises en charge par le coprocesseur, celui-ci se bornant à effectuer le masquage homomorphe sur le résultat de l'instruction avant de le stocker en mémoire.

Le déchiffrement en 360 est potentiellement vulnérable aux attaques physiques (et notamment aux attaques par canaux auxiliaires) visant à déterminer la clé secrète *sk* du cryptosystème. Le cas échéant, on pourra rendre résistant le circuit chargé du déchiffrement en utilisant une méthode de transformation générique comme décrit par exemple dans l'article de Y. Ishai et al. intitulé « Private circuits : securing hardware against probing attacks » publié dans Porc. of Annual International Cryptology Conference, 2003.

## Revendications

1. Méthode d'exécution d'un programme opérant sur des données chiffrées au moyen d'un chiffrement homomorphe, ledit programme comprenant une pluralité d'instructions, chaque instruction pouvant être représentée par une fonction desdites données, l'exécution de ladite instruction comprenant une évaluation homomorphe (320) par un processeur de ladite fonction à partir desdites données chiffrées, où

   (a) le résultat de ladite évaluation est masqué par une première opération sommation (350) avec une séquence aléatoire préalablement chiffrée (335) par ledit chiffrement homomorphe, ladite première opération de sommation dans le domaine des chiffrés correspondant à une opération de sommation modulo 2 dans le domaine des données en clair ;
   (b) le résultat de ladite évaluation ainsi masqué est d'abord déchiffré (360), puis rechiffré (370) au moyen dudit chiffrement homomorphe ;
   (c) le résultat obtenu à l'étape (b) est démasqué par une seconde opération de sommation (380) avec ladite séquence aléatoire préalablement chiffrée par ledit chiffrement homomorphe, ladite seconde opération de sommation dans le domaine des chiffrés correspondant à une opération de sommation modulo 2 dans le domaine des données en clair, le résultat de la seconde opération de sommation étant stocké dans une zone mémoire.

2. Méthode d'exécution d'un programme selon la revendication 1, **caractérisée en ce que** les étapes (a), (b) et (c) sont effectuées par un coprocesseur distinct dudit processeur.

3. Méthode d'exécution d'un programme selon la revendication 1 ou 2, **caractérisée en ce que** lesdites instructions sont stockées sous la forme de fonctions exprimées dans le domaine des données en clair, lesdites instructions étant traduites lors du boot en exprimant lesdites fonctions dans le domaine des données chiffrées, avant d'être stockées dans une mémoire programme (315).

4. Méthode d'exécution d'un programme selon la revendication 1 ou 2, **caractérisée en ce que** lesdites instructions sont stockées dans une mémoire programme sous la forme de fonctions exprimées dans le domaine des données en clair, lesdites instructions étant traduites à la volée, au fur et à mesure de leur exécution, en exprimant lesdites fonctions dans le domaine des données chiffrées.

5. Méthode d'exécution d'un programme selon l'une des revendications précédentes, **caractérisée en ce que** le chiffrement est un chiffrement entièrement homomorphe.

6. Méthode d'exécution d'un programme selon l'une des revendications précédentes, **caractérisée en ce que** le chiffrement est un chiffrement relativement homomorphe.

7. Méthode d'exécution d'un programme selon la revendication 6, **caractérisée en ce que** le chiffrement est un chiffrement BGV.

8. Méthode d'exécution d'un programme selon la revendication 6, **caractérisée en ce que** le chiffrement est un chiffrement ATV.

9. Méthode d'exécution d'un programme selon la revendication 6, **caractérisée en ce que** le chiffrement est un chiffrement YASHE.

**Patentansprüche**

1. Verfahren zur Ausführung eines Programms, das auf Daten operiert, die mit Hilfe einer homomorphen Verschlüsselung verschlüsselt wurden, wobei das Programm eine Mehrzahl von Befehlen umfasst, wobei jeder Befehl durch eine Funktion der Daten repräsentiert werden kann, wobei die Ausführung des Befehls eine homomorphe Bewertung (320) der Funktion ausgehend von den verschlüsselten Daten durch einen Prozessor umfasst, wobei:

   (a) das Ergebnis der Bewertung durch eine erste Summierungsoperation (350) mit einer Zufallssequenz maskiert wird, die zuvor durch die homomorphe Verschlüsselung verschlüsselt wurde (335), wobei die erste Summierungsoperation in der verschlüsselten Domäne einer Modulo-2-Summierungsoperation in der unverschlüsselten Datendomäne entspricht;
   (b) das derart maskierte Ergebnis der Bewertung zuerst entschlüsselt wird (360), und dann mit Hilfe der homomorphen Verschlüsselung erneut verschlüsselt wird (370);
   (c) das im Schritt (b) erhaltene Ergebnis durch eine zweite Summierungsoperation (380) mit der Zufallssequenz demaskiert wird, die zuvor durch die homomorphe Verschlüsselung verschlüsselt wurde, wobei die zweite Summierungsoperation in der verschlüsselten Domäne einer Modulo-2-Summierungsoperation in der unverschlüsselten Datendomäne entspricht, wobei das Ergebnis der zweiten Summierungsoperation in einer Speicherzone gespeichert wird.

2. Verfahren zur Ausführung eines Programms nach Anspruch 1, **dadurch gekennzeichnet, dass** die Schritte (a), (b) und (c) von einem Coprozessor ausgeführt werden, der von dem Prozessor verschieden ist.

3. Verfahren zur Ausführung eines Programms nach Anspruch 1 oder 2, **dadurch gekennzeichnet, dass** die Befehle in der Form von Funktionen gespeichert werden, die in der unverschlüsselten Datendomäne ausgedrückt sind, wobei die Befehle beim Booten übersetzt werden, indem die Funktionen in der verschlüsselten Datendomäne ausgedrückt werden, bevor sie in einem Programmspeicher (315) gespeichert werden.

4. Verfahren zur Ausführung eines Programms nach Anspruch 1 oder 2, **dadurch gekennzeichnet, dass** die Befehle in einem Programmspeicher in Form von Funktionen gespeichert werden, die in der unverschlüsselten Datendomäne ausgedrückt sind, wobei die Befehle im Verlauf ihrer Ausführung fortlaufend übersetzt werden, indem die Funktionen in der verschlüsselten Datendomäne ausgedrückt werden.

5. Verfahren zur Ausführung eines Programms nach einem der vorhergehenden Ansprüche, **dadurch gekennzeichnet, dass** die Verschlüsselung eine vollständig homomorphe Verschlüsselung ist.

6. Verfahren zur Ausführung eines Programms nach einem der vorhergehenden Ansprüche, **dadurch gekennzeichnet, dass** die Verschlüsselung eine relativ homomorphe Verschlüsselung ist.

7. Verfahren zur Ausführung eines Programms nach Anspruch 6, **dadurch gekennzeichnet, dass** die Verschlüsselung eine BGV-Verschlüsselung ist.

8. Verfahren zur Ausführung eines Programms nach Anspruch 6, **dadurch gekennzeichnet, dass** die Verschlüsselung eine ATV-Verschlüsselung ist.

9. Verfahren zur Ausführung eines Programms nach Anspruch 6, **dadurch gekennzeichnet, dass** die Verschlüsselung eine YASHE-Verschlüsselung ist.

**Claims**

1. Method of executing a program operating on data encrypted by means of a homomorphic encryption, said program comprising a plurality of instructions, each instruction possibly being represented by a function of said data, execution of said instruction including a homomorphic evaluation (320) by a processor of said function starting from said encrypted data, **characterised in that**:

   (a) the result of said evaluation is masked by a first summation operation (350) with a random sequence previously encrypted (355) by said homomorphic encryption, said first summation operation in the ciphertext space corresponding to a modulo 2 summation operation in the plaintext space;

(b) the result of said evaluation thus masked is firstly decrypted (360) and then reencrypted (370) by means of said homomorphic encryption;

(c) the result obtained in step (b) is unmasked by a second summation operation (380) with said random sequence previously encrypted by said homomorphic encryption, said second summation operation in the ciphertext space corresponding to a modulo 2 summation operation in the plaintext space, the result of the second summation operation being stored in a memory zone.

2. Method of executing a program according to claim 1, **characterised in that** steps (a),(b) and (c) are performed by a coprocessor distinct from said processor.

3. Method of executing a program according to claim 1 or 2, **characterised in that** said instructions are stored in the form of functions expressed in the plaintext space, said instructions being translated during the boot by expressing said functions in the ciphertext space before being stored in a program memory (315).

4. Method of executing a program according to claim 1 or 2, **characterised in that** said instructions are stored in a program memory in the form of functions expressed in the plaintext space, said functions being translated on the fly, as they are executed, expressing said functions in the ciphertext space.

5. Method of executing a program according to one of the previous claims, **characterised in that** the encryption is a fully homomorphic encryption.

6. Method of executing a program according to one of the previous claims, **characterised in that** the encryption is a somewhat homomorphic encryption.

7. Method of executing a program according to claim 6, **characterised in that** the encryption is a BGV encryption.

8. Method of executing a program according to claim 6, **characterised in that** the encryption is a ATV encryption.

9. Method of executing a program according to claim 6, **characterised in that** the encryption is a YASHE encryption.

**Fig.1**

**Fig. 2**

$$H.Enc_{pk}(F_n(m_1,\ldots,m_M)+r) \oplus H.Enc_{pk}(r)$$

310

H.Enc_{pk}(m_1)

H.Enc_{pk}(m_M)

320 — $H.Eval_{pk}(F_n)$

315

$F_1$

$F_N$

350

360 — $H.Dec_{sk}$

370 — $H.Enc_{pk}$

380

340 — $H.Enc_{pk}$

$r$

330 — PNG

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015008607 A1

- US 20150381348 A1, Takenaka

**Littérature non-brevet citée dans la description**

- **J.W. BOS et al.** Improved security for a ring-based fully homomorphic encryption scheme. *Cryptology ePrint Archive, Report 2013/075,* 2013
- **JUNGFEN FAN et al.** Somewhat practical fully homomorphic encryption. *Cryptology ePrint Archive,* 2012

- **P. T. BREUER ; J. P. BOWEN.** A Fully Homomorphic Crypto-Processor Design. Springer, 27 Février 2013
- **Y. ISHAI et al.** Private circuits : securing hardware against probing attacks. *Porc. of Annual International Cryptology Conference,* 2003